# EUROPÄISCHE PATENTANMELDUNG

(11) **EP 4 137 843 A1**
(43) Veröffentlichungstag der Anmeldung: **22.02.2023**
(21) Anmeldenummer: 22188525.4
(22) Anmeldetag: 03.08.2022
(51) Int. Cl.: G01S 7/481, F16M 11/12

(54) **VERSTELLBARE AUFHÄNGUNG FÜR EINE SCANVORRICHTUNG EINES FLURFÖRDERZEUGS UND KOMBINATION EINER DERARTIGEN AUFHÄNGUNG MIT EINER SCANVORRICHTUNG EINES FLURFÖRDERZEUGS**

(30) Priorität: 16.08.2021 DE 102021121220
(71) Anmelder: Jungheinrich Aktiengesellschaft, 22047 Hamburg (DE)
(72) Erfinder: Schüler, Michael, 24558 Wakendorf ll (DE); Lohmann, Helmut, 27404 Gyhum (DE); Brunckhorst, Holger, 22844 Norderstedt (DE); Krenzin, Marcel, 24576 Bad Bramstedt (DE)
(74) Vertreter: Herzog, Markus

(57) **Zusammenfassung**

Die Erfindung betrifft eine verstellbare Aufhängung (30) für eine Scanvorrichtung (18) eines Flurförderzeugs, umfassend eine erste Halterung (32) zur Befestigung am Rahmen (12) des Flurförderzeugs, eine zweite Halterung (34) zur Befestigung an der Scan-vorrichtung (18) und eine Verstellvorrichtung (36) zur Verstellung der beiden Halterungen (32, 34) relativ zueinander. Erfindungsgemäß sind zwei untere Abschnitte (32a, 34a) der beiden Halterungen (32, 34) gelenkig aneinander gelagert. Ferner umfasst die Verstellvorrichtung (36) ein Schiebeelement, das zum einen mit oberen Kulissenelement (36b) und zum anderen mit einem unteren Kulissenelement (36c) in zwei voneinander verschiedenen Richtungen (X, Y) in translatorischem Schiebeeingriff steht und relativ zu diesen in gewünschten Relativschiebepositionen festlegbar ist. Die Erfindung betrifft ferner eine Kombination einer Scanvorrichtung (18) eines Flurförderzeugs mit einer derartigen verstellbaren Aufhängung (30).

## Beschreibung

Die Erfindung betrifft eine verstellbare Aufhängung für eine Scanvorrichtung eines Flurförderzeugs, umfassend eine erste Halterung, die dazu ausgelegt ist, am Rahmen des Flurförderzeugs befestigt zu werden, eine zweite Halterung, die dazu ausgelegt ist, an der Scanvorrichtung befestigt zu werden, und eine Verstellvorrichtung, die dazu ausgelegt ist, eine Verstellung der ersten Halterung und der zweiten Halterung relativ zueinander bezüglich zweier voneinander unabhängiger Freiheitsgrade zu ermöglichen.

Derartige verstellbare Aufhängungen sind im Stand der Technik bekannt.

So offenbart beispielsweise die DE 199 02 287 A1 den Einsatz einer elektrisch verstellbaren Aufhängung für eine Laser-Scanvorrichtung, ohne deren Aufbau näher zu erläutern. Die elektrische Verstellbarkeit bedingt jedoch auf jeden Fall den Einsatz von Stellmotoren oder sonstigen Aktuatoren, was die Herstellungskosten der Aufhängung erhöht.

Ferner offenbaren die CN 205 709 705 U und die CN 206 989 905 U jeweils eine Verstellvorrichtung für einen Scanner, bei der durch das Lösen einer Klemmschraube ein Rotationsfreiheitsgrad freigegeben wird, der ein Verschwenken des Scanners unter dem Einfluss der Schwerkraft ermöglicht. Der Scanner kann auf diese Weise unmittelbar von Hand justiert werden, bevor schließlich die Klemmschraube wieder festgezogen wird. Mit dieser Aufhängung kann die für die Justierung der Scanvorrichtungen eines Flurförderzeugs erforderliche Genauigkeit nicht oder zumindest nur mit hohem Aufwand erzielt werden.

Demgegenüber ist es Aufgabe der Erfindung, eine verstellbare Aufhängung für eine Scanvorrichtung eines Flurförderzeugs bereitzustellen, die über eine verbesserte Justierbarkeit verfügt.

Diese Aufgabe wird erfindungsgemäß durch eine verstellbare Aufhängung der eingangs genannten Art gelöst, bei welcher ein unterer Abschnitt der ersten Halterung und ein unterer Abschnitt der zweiten Halterung miteinander verbunden sind, und bei welcher die Verstellvorrichtung ein Schiebeelement umfasst, das zum einen mit der ersten Halterung oder einem mit der ersten Halterung verbindbaren Element und zum anderen mit der zweiten Halterung oder einem mit der zweiten Halterung verbindbaren Element in zwei voneinander verschiedenen Richtungen in translatorischem Schiebeeingriff steht und relativ zu diesen in gewünschten Relativschiebepositionen festlegbar ist.

Da Scanvorrichtungen von Flurförderzeugen üblicherweise "über Kopf" montiert sind, um eine Anordnung der Scan-Ebene in der Nähe des Untergrunds zu ermöglichen, auf dem das Flurförderzeug aufsteht, wird durch die Anordnung der Verbindung der beiden Halteelemente an einem unteren Abschnitt der ersten und zweiten Halterungen erreicht, dass sich die Verbindung der beiden Halteelemente möglichst nahe an der Scan-Ebene befindet. Dies erlaubt im Zusammenspiel mit der translatorischen Verschiebung des Schiebeelements eine effektive Untersetzung der Schiebebewegung des Schiebeelements in eine Justierschwenkbewegung der Scanvorrichtung.

Die beiden voneinander verschiedenen Richtungen können vorzugsweise orthogonal zueinander verlaufen.

Berücksichtigt man, dass zum einen die Scan-Ebene der Scanvorrichtung, die auch erfindungsgemäß von einem Laser-Scanner gebildet sein kann, etwa 100 mm (± 25 mm) oberhalb des Untergrunds angeordnet sein muss, um sicherzustellen, dass auch unbeladene Ladehilfsmittel, insbesondere Paletten, wobei beispielsweise Euro-Paletten eine Höhe von 144 mm aufweisen, zuverlässig erfasst werden können und dass zum anderen bei Einsatz der Scanvorrichtung als Personenschutz-Scanner ein Detektionsradius von mindestens 9 m gewährleistet sein muss, so ergibt sich eine erforderliche Justiergenauigkeit von etwa 0,7°. Will man die Scanvorrichtung zudem auch als Navigations-Scanner einsetzen, was einen Detektionsradius von mindestens 50 m erfordert, so muss die Justiergenauigkeit sogar etwa 0,1° betragen. Beide Anforderungen können durch die erfindungsgemäße verstellbare Aufhängung ohne Weiteres erfüllt werden.

Um die unteren Abschnitte der ersten und zweiten Halterungen einerseits möglichst nah an der Scan-Ebene der Scanvorrichtung andererseits aber außerhalb des "Blickfelds" der Scanvorrichtung anordnen zu können, wird vorgeschlagen, dass der untere Abschnitt der ersten Halterung und der untere Abschnitt der zweiten Halterung dazu bestimmt sind, unterhalb der Scanvorrichtung angeordnet zu sein.

Im Hinblick auf eine möglichst effektive Untersetzung der translatorischen Bewegung des Schiebeelements in eine Schwenkbewegung der Scanvorrichtung kann ferner vorgesehen sein, dass die Verstellvorrichtung zwischen einem oberen Abschnitt der ersten Halterung und einem oberen Abschnitt der zweiten Halterung angeordnet ist, wobei der obere Abschnitt der ersten Halterung und der obere Abschnitt der zweiten Halterung dazu bestimmt sind, oberhalb der Scanvorrichtung angeordnet zu sein. Vorteilhaft an dieser die möglichen Hebellängen optimal ausnutzenden Anordnung ist ferner, dass die beiden voneinander verschiedenen Richtungen in diesem Fall im Wesentlichen horizontal verlaufen, so dass die Schwerkraft auf das Schiebeelement keinen eine Verstellbewegung hervorrufenden Einfluss ausüben kann. Zudem ist auf diese Weise die Verstellvorrichtung auch in dem am Flurförderzeug verbauten Zustand oberhalb der Scanvorrichtung leicht zugänglich, so dass erforderlichenfalls in einfacher Weise nachjustiert werden kann.

Grundsätzlich ist es denkbar, dass die beiden Halterungen einstückig oder, beispielsweise durch eine Verschraubung oder dergleichen, betriebsfest miteinander verbunden sind. Erfindungsgemäß ist es jedoch bevorzugt, dass die beiden Halteelemente gelenkig aneinander gelagert sind.

An dieser Stelle sei erwähnt, dass die gelenkige Lagerung der beiden unteren Abschnitte beispielsweise von einem, beispielsweise aus Kunststoff gefertigten, zumindest teilweise kugelförmig ausgebildeten Element gebildet sein kann, das an der ersten Halterung befestigt, beispielsweise verschraubt, sein kann, wobei die zweite Halterung auf dieses kugelförmige Element schwenkbar aufgesetzt sein kann. Grundsätzlich ist es jedoch auch denkbar, dass die gelenkige Lagerung der beiden Halterungen aneinander mittels eines elastischen Pufferelements, beispielsweise eines Polyurethanpuffers oder eines Gummipuffers, realisiert ist.

Um die Funktion der Scanvorrichtung nicht oder allenfalls in geringem Maße zu stören, kann ein in Höhenrichtung der Scan-Ebene der Scanvorrichtung benachbarter Abschnitt sowohl der ersten Halterung als auch der zweiten Halterung in Umfangsrichtung um die Scanvorrichtung herum eine Abmessung aufweisen, die sich im Wesentlichen vollständig innerhalb eines toten Winkelbereichs der Scanvorrichtung befindet. Der in Höhenrichtung der Scan-Ebene benachbarte Abschnitt kann sich dabei vorteilhafterweise im Wesentlichen symmetrisch oberhalb und unterhalb der Scan-Ebene erstrecken.

Ferner können ein zur Befestigung der ersten Halterung am Rahmen des Flurförderzeugs bestimmter Befestigungsabschnitt der ersten Halterung und ein zur Befestigung der zweiten Halterung an der Scanvorrichtung bestimmter Befestigungsabschnitt der zweiten Halterung einander benachbart auf der gleichen Seite der Scanvorrichtung angeordnet sein, beispielsweise in vertikaler Verlängerung der der Scan-Ebene benachbarten Abschnitte der beiden Halterungen.

Um wenigstens eine Leitung, beispielsweise wenigstens eine Stromzufuhrleitung und/oder wenigstens eine Datenleitung, in einfacher Weise zu der Scanvorrichtung hin- bzw. von dieser wegführen zu können, können der obere Abschnitt und der Befestigungsabschnitt der ersten Halterung über einen von einem seitlichen Rand des Befestigungsabschnitts ausgehenden Verbindungsabschnitt der ersten Halterung verbunden sein, können der obere Abschnitt und der Befestigungsabschnitt der zweiten Halterung über einen von einem seitlichen Rand des Befestigungsabschnitts ausgehenden Verbindungsabschnitt der zweiten Halterung verbunden sein, und können die beiden Verbindungsabschnitte auf voneinander abgewandten Seiten der Scanvorrichtung angeordnet sein.

In Weiterbildung der Erfindung wird vorgeschlagen, dass die Verbindung der ersten Halterung und der zweiten Halterung und/oder das Schiebeelement auf oder in unmittelbarer Nähe einer Vertikalachse der Scanvorrichtung angeordnet sind. Hierdurch können Verformungen der beiden Halterungen im Zuge der Justierung der Scanvorrichtung aufgrund der Überbestimmtheit der Anordnung klein gehalten werden. In diesem Zusammenhang ist es ferner vorteilhaft, wenn die erste Halterung und/oder die zweite Halterung aus einem elastisch verformbaren Material gefertigt ist bzw. sind, beispielsweise einem Metallblech, vorzugsweise Stahlblech. Auf diese Weise können etwaig auftretende Verformungen der Halterungen auf elastische Verformungen beschränkt werden.

Um vorgefertigte Verstellvorrichtungen einsetzen und damit den Montageaufwand reduzieren zu können, kann das mit der ersten Halterung verbindbare Element ein erstes Kulissenelement mit einer ersten Führung umfassen, in der ein erster Abschnitt des Schiebeelements translatorisch verschiebbar geführt ist, und/oder kann das mit der zweiten Halterung verbindbare Element ein zweites Kulissenelement mit einer zweiten Führung umfassen, in der ein von dem ersten Abschnitt verschiedener, zweiter Abschnitt des Schiebeelements translatorisch verschiebbar geführt ist.

Um die Genauigkeit der Justierung der Scanvorrichtung weiter erhöhen zu können, wird außerdem vorgeschlagen, dass wenigstens eine erste Stellschraube, die im ersten Kulissenelement drehbar gelagert ist, mit dem ersten Abschnitt des Schiebeelements in Gewindeeingriff steht und/oder dass wenigstens eine zweite Stellschraube, die im zweiten Kulissenelement drehbar gelagert ist, mit dem zweiten Abschnitt des Schiebeelements in Gewindeeingriff steht. Auf diese Weise kann das Schiebeelement präzise um Bruchteile von Millimetern verlagert werden, wobei die Steigung des Gewindes der Stellschrauben die Feinfühligkeit der Justierbarkeit bestimmt. Dabei ist zu berücksichtigen dass die Steigung von metrischen Feingewinden, die hierbei zum Einsatz kommen können, selbst bereits weniger als 1 mm betragen kann, und dass eine Genauigkeit der Verdrehung einer Stellschraube um 1/8 Umdrehung ohne Weiteres reproduzierbar ist.

Ferner kann die erste Stellschraube in dem ersten Kulissenelement und/oder die zweite Stellschraube in dem zweiten Kulissenelement axial fest gelagert sein. Diese axial feste Lagerung kann beispielsweise dadurch realisiert sein, dass ein Kopf der Stellschraube in einer Tasche des jeweiligen Kulissenelements verschiebefest aufgenommen ist.

Um eine einmal festgelegte Stellung des Schiebeelements sichern zu können, wird vorgeschlagen, dass wenigstens eine erste Konterschraube dazu ausgelegt ist, eine Relativposition des ersten Kulissenelements und des Schiebeelements festzulegen, und/oder dass wenigstens eine zweite Konterschraube dazu ausgelegt ist, eine Relativposition des zweiten Kulissenelements und des Schiebeelements festzulegen.

Nach einem weiteren Gesichtspunkt betrifft die Erfindung eine Kombination einer Scanvorrichtung eines Flurförderzeugs mit einer erfindungsgemäßen verstellbaren Aufhängung nach einem der vorhergehenden Ansprüche.

Nachzutragen ist noch, dass sich die Orientierungsangaben "horizontal" und "vertikal" auf einen üblichen Betriebszustand des Flurförderzeugs beziehen, in welchem dieses auf einem im Wesentlichen horizontal verlaufenden, ebenen Untergrund aufsteht. Analoges gilt auch für die Begriffe "oben", "unten" und dergleichen.

Die Erfindung wird im Folgenden mit Bezug auf die beigefügten Zeichnungen anhand einer Ausführungsform näher erläutert werden. Es stellt dar:
- Figur 1: eine perspektivische Ansicht eines mit erfindungsgemäßen Aufhängungen für die Scanvorrichtung ausgestatteten Flurförderzeugs;
- Figur 2: eine Explosionsansicht eines Ausführungsbeispiels der erfindungsgemäßen Aufhängung nebst der dieser zugeordneten Scanvorrichtung;
- Figuren 3 und 4: zwei geschnittene Seitenansichten der Aufhängung nebst Scanvorrichtung gemäß zwei vertikalen zueinander orthogonal verlaufenden Schnittebenen; und
- Figur 5: eine Explosionsansicht der Verstellvorrichtung der erfindungsgemäßen Aufhängung.

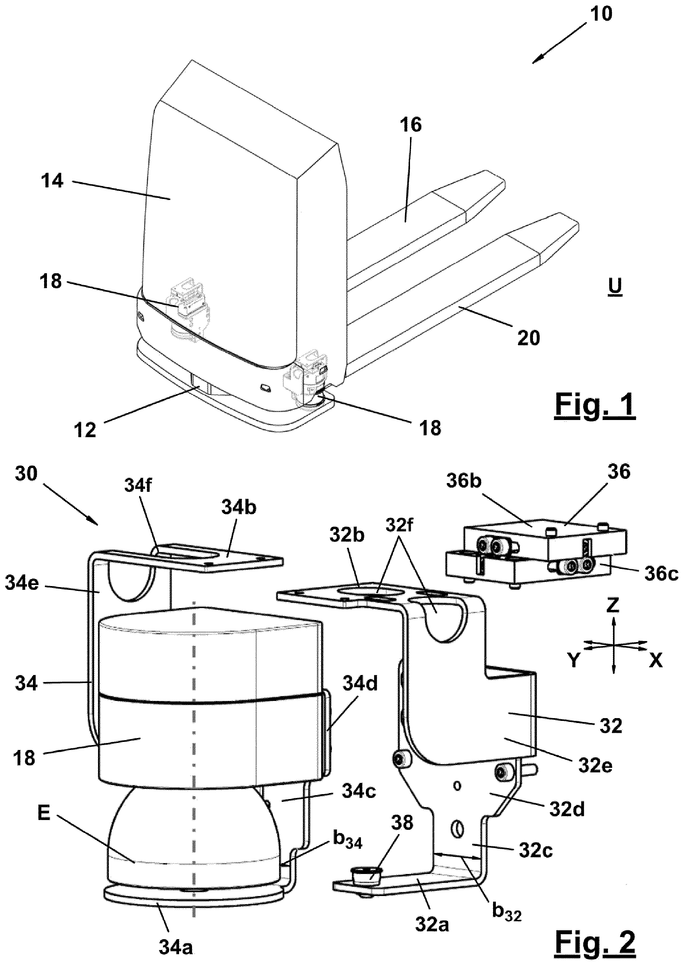

In Figur 1 ist ein Flurförderzeug ganz allgemein mit 10 bezeichnet. Das Flurförderzeug 10 kann beispielsweise ein fahrerloses Flurförderzeug sein, auch AGV (automated guided vehicle) genannt. Es umfasst einen Rahmen 12, an dem ein Gehäuse 14 befestigt ist. In dem Gehäuse 14 sind alle für den Betrieb des Flurförderzeugs 10 erforderlichen Komponenten aufgenommen, insbesondere ein die Bewegung des Flurförderzeugs 10 auf einem Untergrund U ermöglichender Antrieb, ein das Heben und Senken der Hubgabeln 16 ermöglichender Antrieb, die zum Speisen der Antriebe erforderlichen Batterien, eine Steuereinheit zum Ansteuern der Antriebe sowie Sensoren, beispielsweise Scanvorrichtungen 18, zur Erfassung der Umgebung des Flurförderzeugs 10 und dergleichen. In dem dargestellten Ausführungsbeispiel überdecken die Hubgabeln 16 die Radarme 20 des Flurförderzeugs 10, die ebenfalls mit dem Rahmen 12 des Flurförderzeugs 10 verbunden sind.

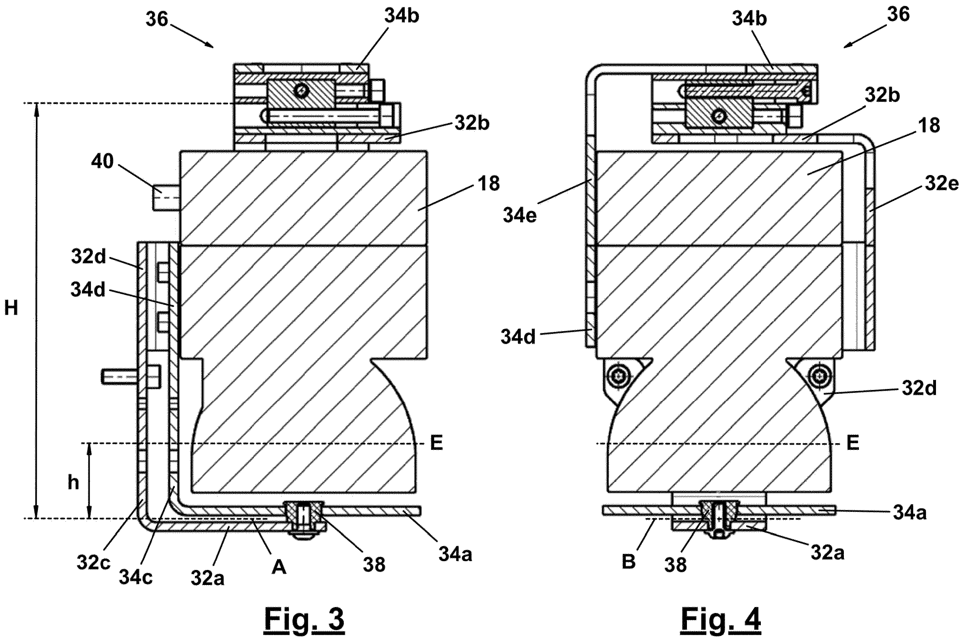

Um die Scanvorrichtungen 18 gemäß zwei voneinander verschiedenen, vorzugsweise zueinander orthogonal verlaufenden Freiheitsgraden (Schwenkachsen A und B gemäß Figuren 3 und 4) justieren zu können, ist jeder der Scanvorrichtungen 18 eine verstellbare Aufhängung 30 zugeordnet. Aufbau und Funktion dieser verstellbaren Aufhängung 30 wird nachstehend mit Bezug auf die Figuren 2 bis 5 näher erläutert werden.

Die verstellbare Aufhängung 30 umfasst eine erste Halterung 32, mittels derer die Aufhängung 30 am Rahmen 12 des Flurförderzeugs befestigbar ist, eine zweite Halterung 34 mittels derer die Aufhängung 30 an der Scanvorrichtung 18 befestigbar ist, und eine Verstellvorrichtung 36, mittels derer die erste Halterung 32 relativ zur zweiten Halterung 34 verstellt werden kann.

Um diese Verstellung zu ermöglichen, weist die erste Halterung 32 einen im Wesentlichen horizontal verlaufenden unteren Abschnitt 32a auf, an dem ein elastisch verformbares, beispielsweise aus Gummi gefertigtes, Lagerelement 38 befestigt ist. Ferner weist die zweite Halterung 34 einen im Wesentlichen horizontal verlaufenden unteren Abschnitt 34a auf, über den sie ebenfalls mit dem Lagerelement 38 verbunden ist (siehe Figuren 3 und 4). Auf diese Wiese können die beiden Halterungen 32 und 34 um zwei orthogonal zueinander verlaufende Achsen A und B verschwenkt werden.

Grundsätzlich ist es jedoch auch denkbar, die beiden Halterungen 32 und 34 im Bereich des Lagerelements 38 einstückig miteinander auszubilden oder unmittelbar aneinander zu befestigen, beispielsweise durch eine Verschraubung.

Um das Verschwenken um die Achsen A und B zu ermöglichen, weist die erste Halterung 32 ferner einen im Wesentlichen horizontal verlaufenden oberen Abschnitt 32b auf, und weist die zweite Halterung 34 ferner einen im Wesentlichen horizontal verlaufenden oberen Abschnitt 34b auf, zwischen denen die Verstellanordnung 36 angeordnet ist. Durch eine Verstellung der Verstellvorrichtung 36 gemäß zwei zueinander orthogonalen Richtungen X und Y (siehe Figur 2) kann ein Verschwenken der zweiten Halterung 34 und damit der Scanvorrichtung 18 relativ zur ersten Halterung 32 um die Achsen A und B erreicht werden.

Da die beiden unteren Abschnitte 32a und 34a unterhalb der Scanvorrichtung 18 angeordnet sind, während die beiden oberen Abschnitte 32b und 34b oberhalb der Scanvorrichtung 18 angeordnet sind, steht für die Herbeiführung der Schwenkbewegung der Scanvorrichtung 18 die größtmögliche Hebellänge H zur Verfügung. Da gleichzeitig die Scan-Ebene E unmittelbar oberhalb der beiden unteren Abschnitte 32a und 34a angeordnet ist, nämlich im Abstand h von diesen, kann die translatorische Verstellbewegung der Verstellvorrichtung 36 durch das Verhältnis h/H der beiden Hebellängen h und H effektiv in eine Schwenkbewegung der Scanvorrichtung 18 untersetzt werden.

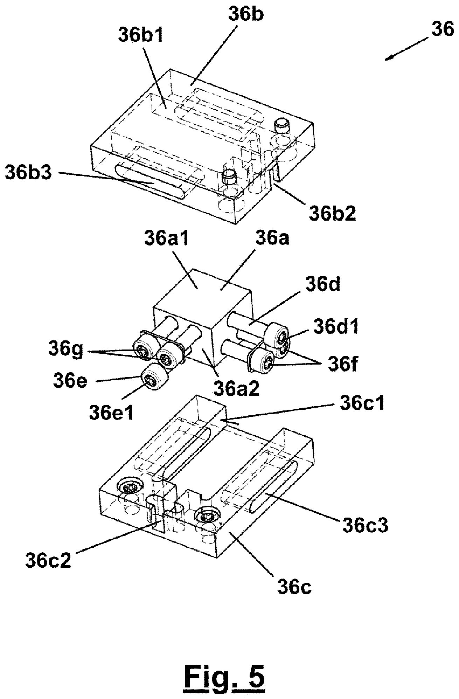

Mit Bezug auf Figur 5 weist die Verstellvorrichtung 36 darüber hinaus einen Aufbau auf, der eine sehr feinfühlige und zuverlässig reproduzierbare translatorische Verstellbewegung ermöglicht.

Und zwar umfasst die Verstellvorrichtung 36 ein Schiebeelement 36a, das mit einem oberen Abschnitt 36a1 in einer Führung 36b1 eines oberen Kulissenelements 36b translatorisch verschiebbar geführt ist und mit einem unteren Abschnitt 36a2 in einer Führung 36c1 eines unteren Kulissenelements 36c translatorisch verschiebbar geführt ist. Ferner umfasst die Verstellvorrichtung 36 eine obere Stellschraube 36d, welche im oberen Kulissenelement 36b drehbar gelagert ist und mit dem Schiebeelement 36a in Gewindeeingriff steht, sowie eine untere Stellschraube 36e, welche im unteren Kulissenelement 36c drehbar gelagert ist und mit dem Schiebeelement 36a in Gewindeeingriff steht. Der Kopf 36d1 bzw. 36e1 der beiden Stellschrauben 36d, 36e ist jeweils in einer Tasche 36b2 bzw. 36c2 der Kulissenelemente 36b und 36c axial fest, aber drehbar aufgenommen.

Die beiden Stellschrauben 36d und 36e sind mit einem Feingewinde ausgebildet, d.h. einem Gewinde, das eine Steigung von weniger als 1 mm aufweisen kann. Da eine Drehung der Stellschrauben 36d und 36e um 1/8 Umdrehung ohne Weiteres reproduziert werden kann, ermöglichen die Stellschrauben 36d und 36e eine Verstellung mit einer Feinfühligkeit in der Größenordnung von 0,1 mm. Zusammen mit dem Untersetzungsfaktor h/H können daher ohne Weiteres Schwenkbewegungen um die Achsen A und B mit einer Feinfühligkeit in der Größenordnung von 0,1° erzielt werden.

Wurde die gewünschte Schiebeposition erreicht, so kann diese mittels Konterschrauben 36f und 36g, die Längsschlitze 36b3 bzw. 36c3 der Kulissenelemente 36b und 36c durchsetzen, fixiert werden.

Wiederum mit Bezug auf die Figuren 2 bis 4 wird nun noch der weitere Aufbau der Halterungen 32 und 34 beschrieben werden.

Zur Verbindung ihres unteren Abschnitts 32a mit ihrem oberen Abschnitt 32b weist die erste Halterung 32 in dem dargestellten Ausführungsbeispiel drei im Wesentlichen vertikal verkaufende Abschnitte auf. Ein an den unteren Abschnitt 32a angrenzender Abschnitt 32c ist auf Höhe der Scan-Ebene E und zu dieser benachbart angeordnet und weist eine Breite b₃₂ auf, die vollständig innerhalb des toten Winkels der Scanvorrichtung 18 angeordnet werden kann. An den Abschnitt 32c schließt sich oberhalb ein Befestigungsabschnitt 32d an, mittels dessen die erste Halterung 32 am Rahmen 12 des Flurförderzeugs 10 befestigt werden kann, beispielsweise mittels Schrauben. Zur Verbindung des Befestigungsabschnitts 32d mit dem oberen Abschnitt 32b ist schließlich noch ein Verbindungsabschnitt 32e vorgesehen, der seitlich vom Befestigungsabschnitt 32d ausgeht und im Wesentlichen L-Förmig ausgebildet ist.

In analoger Weise weist die zweite Halterung 34 zur Verbindung ihres unteren Abschnitts 34a mit ihrem oberen Abschnitt 34b ebenfalls drei im Wesentlichen vertikal verkaufende Abschnitte auf. Ein an den unteren Abschnitt 34a angrenzender Abschnitt 34c ist auf Höhe der Scan-Ebene E und zu dieser benachbart angeordnet und weist eine Breite b₃₄ auf, die vollständig innerhalb des toten Winkels der Scanvorrichtung 18 angeordnet werden kann. An den Abschnitt 34c schließt sich oberhalb ein Befestigungsabschnitt 34d an, mittels dessen die zweite Halterung 34 an der Scanvorrichtung 18 befestigt werden kann, beispielsweise mittels Schrauben. Zur Verbindung des Befestigungsabschnitts 34d mit dem oberen Abschnitt 34b ist schließlich noch ein Verbindungsabschnitt 34e vorgesehen, der seitlich vom Befestigungsabschnitt 34d ausgeht und im Wesentlichen L-Förmig ausgebildet ist.

Sowohl die beiden auf Höhe der Scan-Ebene E angeordneten Abschnitte 32c und 34c als auch die beiden Befestigungsabschnitte 32d und 34d sind in radialer Richtung zueinander im Wesentlichen fluchtend angeordnet (siehe insbesondere Figur 3). Die beiden Verbindungsabschnitte 32e und 34e schließen sich hingegen an voneinander abgewandten Seiten der Befestigungsabschnitte 32d bzw. 34d an diese an. Aufgrund dieser Ausbildung und der L-Form der Verbindungsabschnitte 32e und 34e ist auf der Rückseite der Scanvorrichtung 18, auf der sowohl die auf Höhe der Scan-Ebene E angeordneten Abschnitte 32c und 34c als auch die Befestigungsabschnitte 32d und 34d verlaufen, oberhalb der Befestigungsabschnitte 32d und 34d ein Bereich der Scanvorrichtung 18 durch keinen der Abschnitte der Halterungen 32 und 34 bedeckt. Dies ermöglicht es, hier Leitungen, beispielsweise wenigstens eine Stromzufuhrleitung und/oder wenigstens eine Datenleitung, zu der Scanvorrichtung 18 hin- bzw. von dieser wegführen zu können. Ein entsprechender Anschluss ist in Figur 3 mit 40 bezeichnet.

Wie insbesondere aus Figur 2, aber auch den Figuren 3 und 4 zu ersehen ist, können die Halterungen 32 und 34 jeweils wenigstens eine Ausnehmung 32f bzw. 34f aufweisen, über deren Lage und/oder Größe und/oder Gestalt die Elastizität der Halterungen 32 und 34 beeinflusst werden kann.

## Patentansprüche

1. Verstellbare Aufhängung (30) für eine Scanvorrichtung (18) eines Flurförderzeugs (10), umfassend
• eine erste Halterung (32), die dazu ausgelegt ist, am Rahmen (12) des Flurförderzeugs (10) befestigt zu werden,
• eine zweite Halterung (34), die dazu ausgelegt ist, an der Scanvorrichtung (18) befestigt zu werden, und
• eine Verstellvorrichtung (36), die dazu ausgelegt ist, eine Verstellung der ersten Halterung (32) und der zweiten Halterung (34) relativ zueinander bezüglich zweier voneinander unabhängiger Freiheitsgrade (A, B) zu ermöglichen,
**dadurch gekennzeichnet,**
**dass** ein unterer Abschnitt (32a) der ersten Halterung (32) und ein unterer Abschnitt (34a) der zweiten Halterung (34) miteinander verbunden sind, und
**dass** die Verstellvorrichtung (36) ein Schiebeelement (36a) umfasst, das zum einen mit der ersten Halterung oder einem mit der ersten Halterung (32) verbindbaren Element (36b) und zum anderen mit der zweiten Halterung oder einem mit der zweiten Halterung (34) verbindbaren Element (36c) in zwei voneinander verschiedenen Richtungen (X, Y) in translatorischem Schiebeeingriff steht und relativ zu diesen in gewünschten Relativschiebepositionen festlegbar ist.

2. Verstellbare Aufhängung nach Anspruch 1,
**dadurch gekennzeichnet, dass** der untere Abschnitt (32a) der ersten Halterung (32) und der untere Abschnitt (34a) der zweiten Halterung (34) dazu bestimmt sind, unterhalb der Scanvorrichtung (18) angeordnet zu sein.

3. Verstellbare Aufhängung nach Anspruch 1 oder 2,
**dadurch gekennzeichnet, dass** die Verstellvorrichtung (36) zwischen einem oberen Abschnitt (32b) der ersten Halterung (32) und einem oberen Abschnitt (34b) der zweiten Halterung (34) angeordnet ist, wobei der obere Abschnitt (32b) der ersten Halterung (32) und der obere Abschnitt (34b) der zweiten Halterung (34) dazu bestimmt sind, oberhalb der Scanvorrichtung (18) angeordnet zu sein.

4. Verstellbare Aufhängung nach einem der Ansprüche 1 bis 3,
**dadurch gekennzeichnet, dass** ein in Höhenrichtung (Z) der Scan-Ebene (E) der Scanvorrichtung (18) benachbarter Abschnitt sowohl der ersten Halterung (32) als auch der zweiten Halterung (34) in Umfangsrichtung eine Abmessung (b₃₂, b₃₄) aufweist, die sich im Wesentlichen vollständig innerhalb eines toten Winkelbereichs der Scanvorrichtung (18) befindet.

5. Verstellbare Aufhängung nach einem der Ansprüche 1 bis 4,
**dadurch gekennzeichnet, dass** ein zur Befestigung der ersten Halterung (32) am Rahmen (12) des Flurförderzeugs (10) bestimmter Befestigungsabschnitt (32d) der ersten Halterung (32) und ein zur Befestigung der zweiten Halterung (34) an der Scanvorrichtung (18) bestimmter Befestigungsabschnitt (34d) der zweiten Halterung (34) einander benachbart auf der gleichen Seite der Scanvorrichtung (18) angeordnet sind.

6. Verstellbare Aufhängung nach Anspruch 5,
**dadurch gekennzeichnet,**
**dass** der obere Abschnitt (32b) und der Befestigungsabschnitt (32d) der ersten Halterung (32) über einen von einem seitlichen Rand des Befestigungsabschnitts (32d) ausgehenden Verbindungsabschnitt (32e) der ersten Halterung (32) verbunden sind,
**dass** der obere Abschnitt (34b) und der Befestigungsabschnitt (34d) der zweiten Halterung (34) über einen von einem seitlichen Rand des Befestigungsabschnitts (34d) ausgehenden Verbindungsabschnitt (34e) der zweiten Halterung (34) verbunden sind, und
**dass** die beiden Verbindungsabschnitte (32e, 34e) auf voneinander abgewandten Seiten der Scanvorrichtung (18) angeordnet sind.

7. Verstellbare Aufhängung nach einem der Ansprüche 1 bis 6,
**dadurch gekennzeichnet, dass** der untere Abschnitt (32a) der ersten Halterung (32) und der untere Abschnitt (34a) der zweiten Halterung (34) gelenkig aneinander gelagert sind.

8. Verstellbare Aufhängung nach Anspruch 7,
**dadurch gekennzeichnet, dass** die gelenkige Lagerung (38) der ersten Halterung (32) und der zweiten Halterung (34) und/oder das Schiebeelement (36a) auf oder in unmittelbarer Nähe einer Vertikalachse der Scanvorrichtung (18) angeordnet sind.

9. Verstellbare Aufhängung nach einem der Ansprüche 1 bis 8,
**dadurch gekennzeichnet, dass** die erste Halterung (32) und/oder die zweite Halterung (34) aus einem elastisch verformbaren Material gefertigt ist bzw. sind.

10. Verstellbare Aufhängung nach einem der Ansprüche 1 bis 9,
**dadurch gekennzeichnet, dass** das mit der ersten Halterung (32) verbindbare Element ein erstes Kulissenelement (36b) mit einer ersten Führung (36b1) umfasst, in der ein erster Abschnitt (36a1) des Schiebeelements (36a) translatorisch verschiebbar geführt ist, und/oder dass das mit der zweiten Halterung (34) verbindbare Element ein zweites Kulissenelement (36c) mit einer zweiten Führung (36c1) umfasst, in der ein von dem ersten Abschnitt (36a1) verschiedener, zweiter Abschnitt (36a2) des Schiebeelements (36a) translatorisch verschiebbar geführt ist.

11. Verstellbare Aufhängung nach Anspruch 10,
**dadurch gekennzeichnet, dass** wenigstens eine erste Stellschraube (36d), die im ersten Kulissenelement (36b) drehbar gelagert ist, mit dem ersten Abschnitt (36a1) des Schiebeelements (36a) in Gewindeeingriff steht und/oder dass wenigstens eine zweite Stellschraube (36e), die im zweiten Kulissenelement (36c) drehbar gelagert ist, mit dem zweiten Abschnitt (36a2) des Schiebeelements (36a) in Gewindeeingriff steht.

12. Verstellbare Aufhängung nach Anspruch 11,
**dadurch gekennzeichnet, dass** die erste Stellschraube (36d) in dem ersten Kulissenelement (36b) axial fest gelagert ist und/oder dass die zweite Stellschraube (36e) in dem zweiten Kulissenelement (36c) axial fest gelagert ist.

13. Verstellbare Aufhängung nach einem der Ansprüche 10 bis 12,
**dadurch gekennzeichnet, dass** wenigstens eine erste Konterschraube (36f) dazu ausgelegt ist, eine Relativposition des ersten Kulissenelements (36b) und des Schiebeelements (36a) festzulegen, und/oder dass wenigstens eine zweite Konterschraube (36g) dazu ausgelegt ist, eine Relativposition des zweiten Kulissenelements (36c) und des Schiebeelements (36a) festzulegen.

14. Kombination einer Scanvorrichtung (18) eines Flurförderzeugs (10) mit einer verstellbaren Aufhängung (30) nach einem der vorhergehenden Ansprüche.
